# FASCICULE DE BREVET EUROPEEN

(11) **EP 1 531 506 B1**
(45) Date de publication et mention de la délivrance du brevet: **07.05.2008**
(21) Numéro de dépôt: 04292396.1
(22) Date de dépôt: 08.10.2004
(51) Int. Cl.: H01M 4/52, H01M 10/40

(54) **Matière électrochimiquement active pour électrode positive de générateur électrochimique rechargeable au lithium**
Elektrochemisch aktives Material für eine positive Elektrode einer Sekundär-Lithium-Batterie
Electrochemically active material for a positive electrode of a secondary lithium battery

(30) Priorité: 17.11.2003 FR 0313519
(43) Date de publication de la demande: 18.05.2005
(73) Titulaire: SAFT GROUPE SA, 93170 Bagnolet (FR)
(72) Inventeur: Jordy, Christian, 33440 St Louis de Montferrand (FR); Audry, Claudette, 33520 Bruges (FR); Boeuve, Jean-Pierre, 33450 Montussan (FR); Biensan, Philippe, 33360 Carignan de Bordeaux (FR); Lecerf, André, 35740 Pace (FR)
(74) Mandataire: Hirsch & Associés

(56) Documents cités:
- EP-A- 1 130 663
- US-A- 6 037 095
- PATENT ABSTRACTS OF JAPAN vol. 2000, no. 03, 30 mars 2000 (2000-03-30) & JP 11 345615 A (FUJI PHOTO FILM CO LTD), 14 décembre 1999 (1999-12-14)

## Description

La présente invention se rapporte à une matière électrochimiquement active destinée à être utilisée dans l'électrode positive d'un générateur électrochimique rechargeable au lithium. Bien entendu l'invention concerne aussi l'électrode positive contenant une telle matière active et le générateur au lithium comprenant cette électrode.

Les oxydes lithiés de métaux de transition sont connus comme matière active cathodique utilisable dans les générateurs au lithium. Dans l'électrode positive ou cathode, on utilise habituellement comme matière active des oxydes lithiés de métaux de transition de formule générale Liₓ M_{y} Oₜ où M est le plus souvent Mn, Ni ou Co.

Plus particulièrement LiNiO₂ apparaît comme très prometteur en raison de sa longue durée de vie et de sa capacité élevée pour un coût acceptable. De nombreux travaux se sont attachés à améliorer les caractéristiques de la matière active cathodique LiNiO₂ qui possède une forte instabilité thermique, ce qui présente un risque important pour la sécurité de l'utilisateur. Parmi les solutions envisagées pour stabiliser la structure de LiNiO₂ lors de l'insertion/désinsertion du lithium, la substitution d'une partie du nickel par d'autres éléments moins réactifs est celle qui a été le plus fréquemment retenue.

Par exemple, une matière active d'électrode positive est proposée par le document EP-0 918 041, qui est un oxyde complexe lithium/nickel/cobalt de formule :

Li_{y} Ni₁₋₍ₓ₁₊ₓ₂₎ COₓ₁ Mₓ₂ O₂

avec x₁+x₂ = x ; 0,9 ≤ y ≤ 1,3 ; 0 < x ≤ 0,5 ; 0 < x₁ < 0,5 et x₂ dépend de M, et dans laquelle M est au moins un élément choisi parmi Al, Fe, Mn et B. La stabilité de la matière active en cyclage à température élevée serait ainsi améliorée.

Le document US-6,040,090 décrit une matière active d'électrode positive dont les caractéristiques de charge/décharge en cyclage et la capacité initiale sont améliorées. Cette matière active a pour formule :

Liₐ Co_{b} Mnc (M)_{d} Ni_{1-(b+c+d)} O₂

avec 0 < a < 1,2, 0,01 ≤ b ≤ 0,5, 0,05 ≤ c ≤ 0,4, 0,01 ≤ d ≤ 0,4 et 0,15 ≤ b+c ≤ 0,5, et dans laquelle M est au moins un élément choisi parmi B, Al, Si, Fe, V, Cr, Cu, Zn, Ga, et W. Ce document décrit une matière active qui contient au moins Ni, Co et Mn et qui présente un pic de diffraction des rayons X à 18.71°±0.25° avec une largeur de raie à mi-hauteur inférieure ou égale à 0,22°, et un rapport d'intensité les raies [003] et [104] : I_{[003]}/I_{[104]} ≥ 0,8.

Dans le but d'améliorer l'ensemble des propriétés électrochimiques, notamment la stabilité thermique, le document EP-1 189 296 propose une matière active cathodique monophasée de formule :

Li [Liₓ Co_{y} (Ni_{1-z} Mn_{z})_{1-x-y}] O₂

avec 0 < x ≤ 0,16 ; 0,1 ≤ y ≤ 0,3 et 0,40 ≤ z ≤ 0,65.

L'inconvénient de tous ces matériaux est qu'ils sont aptes à se charger fortement lors d'une surcharge. Par conséquent la quantité de lithium résiduelle dans ces matériaux surchargés est très faible, ce qui les rend très instables thermiquement.

Le document JP11345615 décrit une matière active pour électrode positive de générateur électrochimique. Cette matière active est constituée d'un oxyde mixte de nickel et de lithium ayant pour formule :
LiₓNi_{1-y}M_{y}O_{b-a}Xₐ dans laquelle M est au moins un élément choisi dans le groupe comprenant Mn, Cr, Fe, Co, Cu, Zn, Mo, Ag, W, B, Al, Ga, In, Sn, Pb, Sb, et P ;
X est un halogène ;
0,2<x≤1,2 ;
0,05≤y≤0,5 ;
1,5≤b≤2,5 et
0≤a≤1,0
Le pourcentage d'élément alcalino-terreux dans la matière active est de 0,1 % en poids ou moins ; le pourcentage de soufre dans la matière active est de 0,1 % ou moins et le pourcentage d'humidité est de 0,5 % ou moins.
Il est dit que cette matière active permet possède des performances stables en charge/décharge et que la durée de vie du générateur est accrue.

Le brevet US 6 037 095 décrit une matière active positive pour électrode positive de générateur électrochimique. Cette matière active est constituée d'un oxyde mixte de nickel et de lithium ayant pour formule :

LiₓNi_{1-y}M_{y}O_{2-z}Xₐ dans laquelle :

M est au moins un élément choisi dans le groupe comprenant Mg, Ca, B, Al, Ga, In, Si, Sn, Ge, Pb et au moins un élément d'un métal de transition,
X est un atome d'halogène,
x, y, z et a satisfont les relations :
   0,2<x≤1,2 ;
   0<y≤0,5 ;
   0≤z≤1 et
   0≤a≤2z.

Toutes les matières actives connues actuellement présentent une stabilité thermique encore insuffisante pour assurer la sécurité de l'utilisateur. Bien que satisfaisant à la plupart des tests effectués en conditions abusives (test de court-circuit externe, test au clou, ...), les générateurs contenant de telles matières actives ne résistent pas à la surchauffe provoquée par une surcharge. En effet il se produit alors une élévation de température importante et soudaine due à une réaction exothermique de la matière active d'électrode avec l'électrolyte, ce qui entraîne la dégradation de cette matière active.

Par ailleurs, des matières actives dérivées de LiMnO₂ par substitution ont aussi été étudiées. En effet les oxydes de nickel et de cobalt présentent l'inconvénient d'être beaucoup plus coûteux que l'oxyde de manganèse, de plus leur production est limitée géographiquement à des zones à risques. Parmi les matières actives cathodiques, les matériaux lithiés à base de bioxyde de manganèse ont fait l'objet de nombreux essais. Pour la plupart des matériaux à structure spinelle, les capacités spécifiques des générateurs diminuent rapidement après quelques cycles. Pour améliorer la stabilité de ces composés, la plupart des travaux se sont alors orientés vers une modification de la stoechiométrie ou vers l'introduction d'un cation métallique en substitution d'une partie du manganèse.

Le document US-5,674,645 suggère d'améliorer simultanément la capacité et la stabilité en cyclage de la cathode par l'utilisation d'une matière active qui est un oxy-fluorure répondant à la formule générale :

Li₁₊ₓ M_{y} Mn_{2-x-y} O_{4-z} F_{z}

avec x ≤ 0,4 ; y ≤ 0,3 et 0,05 ≤ z ≤ 1,0 et où M est un métal de transition comme Co, Cr ou Fe.

Dans les générateurs rechargeables au lithium récents, le carbone de l'anode a été remplacé par un composé inorganique, ce qui entraîne des pertes irréversibles de lithium. L'utilisation de LiMn₂O₄ comme matière active cathodique a montré qu'il pouvait fournir une quantité excédentaire de lithium permettant de combler en partie ces pertes.

Par exemple, le document US-6,432,581 décrit une matière active cathodique qui est un composé d'intercalation de formule :

Li₂ Mn₂₋ₓ Meₓ O_{4-z} Fz

avec 0 ≤ x ≤ 0,5 et 0 ≤ z ≤ 0,5 et où M est choisi parmi Al, Cr, Zn, Co, Ni, Li, Mg, Fe, Cu, Ti, Si ou une combinaison de ceux-ci.

Dans le domaine de tension requis par les applications (Uc/Ud = 1.5 avec Uc=4.3V versus Li⁺/Li°, où Uc est la tension de coupure en charge et Ud est la tension de coupure en décharge), les matériaux décrits dans les documents US-5,674,645 et US-6,432,581 présentent une capacité électrochimique réversible trop faible (<125 mAh/g).

Le document EP-1 225 650 décrit une matière active positive contenant un matériau composite de formule générale :

Liₓ (Ni_{1-y} Mel_{y}) (O_{2-z} X_{z}) + A

avec 0,02 ≤ x ≤ 1,3 ; 0,005 ≤ y ≤ 0,5 ; 0,01 ≤ z ≤ 0,5 ; dans laquelle Mel est au moins un élément choisi parmi B, Mg, Al, Sc, Ti, V, Cr, Mn, Co, Cu, Zn, Ga, Y, Zr, Nb, Mo, Tc, Ru, Sn, La, Hf, Ta, W, Re, Pb et Bi, où X est au moins un halogène sélectionné parmi F, Cl, Br et I, et où A contient au moins un élément choisi parmi Na, K et S, la teneur en chacun de ces éléments étant comprise entre 600 ppm et 3000 ppm.

Les générateurs contenant ces matériaux présentent des résultats améliorés au test au clou et en décharge rapide. Cependant la stabilité thermique de ces matériaux en surcharge est insuffisante.

Le document JP-10 326 621 décrit une matière active positive de formule générale : Liₓ (Ni_{1-y} M_{y}) O_{2-z}Xₐ avec 0,2 < x < 1,2 ; 0 < y < 0,5 ; 0 < z < 1 et 0 < a < 2z ; où M est un élément appartenant au groupe 2, 13 et/ou 14 et un élément de transition ; X est un élément halogène.

Ces générateurs fournissent une capacité élevée à un coût réduit. Cependant la plupart de ces générateurs présentent une mauvaise stabilité thermique en surcharge.

Le document EP-1 130 663 décrit une matière active positive de formule :

Li₁₋ₓ M O_{2-y-δ} F_{y}

avec M = Mn ou une combinaison de Mn avec un élément de substitution comme Co, Ni, Cr, Fe, Al, Ga ou In dans laquelle 0 < x < 1 ; z ≤ 0,2 et 0 < y.

Cette famille de matériaux très riche en manganèse cristallise dans une structure orthorhombique et présente un rendement de charge inférieur à 80% lorsque le générateur est cyclé entre 3 V et 4.3 V en raison du fait qu'il se transforme en structure spinelle lors du cyclage électrochimique. D'autre part, leur durée de vie en cyclage est très médiocre (inférieure à 160 cycles).

La présente invention a pour but de proposer un générateur électrochimique rechargeable offrant à l'utilisateur une sécurité accrue en cas de surcharge accidentelle par rapport aux générateurs connus, tout en conservant une capacité réversible élevée et une longue durée de vie en cyclage. En particulier l'invention a pour but de proposer une matière électrochimiquement active dont la stabilité thermique, notamment en surcharge à fort régime, est améliorée de manière à minimiser la réaction entre la matière active et l'électrolyte et à limiter l'emballement thermique qui en résulte.

L'objet de la présente invention est une matière électrochimiquement active résultant de la substitution d'une partie du nickel d'un oxyde mixte de nickel et de lithium du type LiNiO₂. La matière active selon l'invention est un oxyde cristallisant dans une structure rhomboédrique et répondant à la formule :

Li (Ni_{(1-x-y-z-t)} Coₓ Mn_{y}Li_{z} Mₜ) O₂₋ₑ Fe

où
0,05 < x ≤ 0,30
0,05 < y ≤ 0,50
0 ≤ z ≤ 0,20
0 ≤ t ≤ 0,30
0,01 < e ≤ 0,50
0,20 ≤ (1-x-y-z-t)
dans laquelle M est au moins un élément parmi Mg, Al, B, Ti, Si, Zr, Fe, Zn, Cu
et dans laquelle la quantité d'une seconde phase est inférieure à 3% en poids de ladite matière active.

Les générateurs comprenant une électrode positive dont la matière active est dérivée de LiNiO₂, réagissent violemment lors de la surcharge car le matériau devient très instable thermiquement, ce qui se traduit par une température d'emballement thermique faible, et une réaction exothermique de puissance thermique et d'énergie élevées. Il s'ensuit que les accumulateurs contenant une telle matière active connue présentent des caractéristiques en surcharge non satisfaisantes.

Les matières actives positives décrites selon l'invention présentent des caractéristiques à l'état surchargé tout à fait surprenantes ; en effet la puissance thermique et l'énergie totale développées sont très faibles par rapport aux matériaux connus dérivés de LiNiO₂. Elles permettent de réaliser des générateurs électrochimiques sûrs quelles que soient les conditions abusives auxquelles ils sont soumis, en particulier la surcharge.

Selon une première forme d'exécution de l'invention, on a de préférence 0,05< x ≤ 0,30.

Selon une deuxième forme d'exécution de l'invention, on a de préférence 0,20< y ≤ 0,40.

Selon une troisième forme d'exécution de l'invention, on a de préférence 0,05< z ≤ 0,15.

Selon une quatrième forme d'exécution de l'invention, on a de préférence 0,01 < t ≤ 0,10.

Selon une cinquième forme d'exécution de l'invention, on a de préférence 0,01 < e ≤ 0,30.

Selon un premier mode de réalisation de la présente invention, M contient au moins Mg.

Selon un deuxième mode de réalisation de la présente invention, M contient au moins Al.

Selon un troisième mode de réalisation de la présente invention, M contient au moins B.

Selon un quatrième mode de réalisation de la présente invention, M contient au moins Si.

Selon un cinquième mode de réalisation de la présente invention, M contient au moins Ti.

De préférence, la matière active selon l'invention est un oxyde lamellaire substitué de Ni, Co et Mn sensiblement monophasé, la présence éventuelle d'une seconde phase minoritaire restant de préférence inférieure à 1% en poids de la matière active.

La présente invention a aussi pour objet une électrode positive de générateur électrochimique rechargeable au lithium comprenant un support conducteur recouvert d'une couche active contenant la matière active précédemment décrite. La couche active peut contenir en outre un liant et/ou un matériau conducteur.

La présente invention a encore pour objet un générateur électrochimique rechargeable au lithium comprenant une électrode positive contenant la matière active précédemment décrite et une électrode négative dont la matière active est choisie parmi du lithium métallique, les alliages du lithium et un matériau susceptible d'insérer du lithium dans sa structure. La matière active de l'électrode négative peut être notamment un matériau carboné susceptible d'insérer du lithium dans sa structure choisi parmi le graphite, le coke, le noir de carbone et le carbone vitreux.

D'autres caractéristiques et avantages de la présente invention apparaîtront au cours des exemples suivants de réalisation, donnés bien entendu à titre illustratif et non limitatif, et dans le dessin annexé sur lequel
- la figure 1 est une coupe schématique éclatée d'un générateur électrochimique de type bouton comprenant une matière électrochimiquement active selon l'invention,
- la figure 2 représente les deux premières courbes de charge / décharge d'un générateur électrochimique contenant une matière électrochimiquement active selon l'invention de formule: Li(Ni_{0,52}Mg_{0,02}Mn_{0,30} CO_{0,16}) O_{1,87}F_{0,13},
- la figure 3 représente une courbe obtenue par Calorimétrie Différentielle à Balayage dite méthode «D.S.C.» (acronyme de Differential Scanning Calorimetry) appliquée à une électrode comprenant une matière électrochimiquement active à l'état surchargé selon l'invention de formule : Li(Ni_{0,52}Mg_{0,02}Mn_{0,30} Co_{0,16}) O_{1,87}F_{0,13},
- la figure 4, analogue à la figure 3, montre une courbe obtenue par la même méthode D.S.C. pour une électrode comprenant une matière active à l'état surchargé ne faisant pas partie de la présente invention de formule : Li_{1,10}Ni_{0,88}Mg_{0,02}O_{1,9}F_{0,1}+Na 3000ppm.

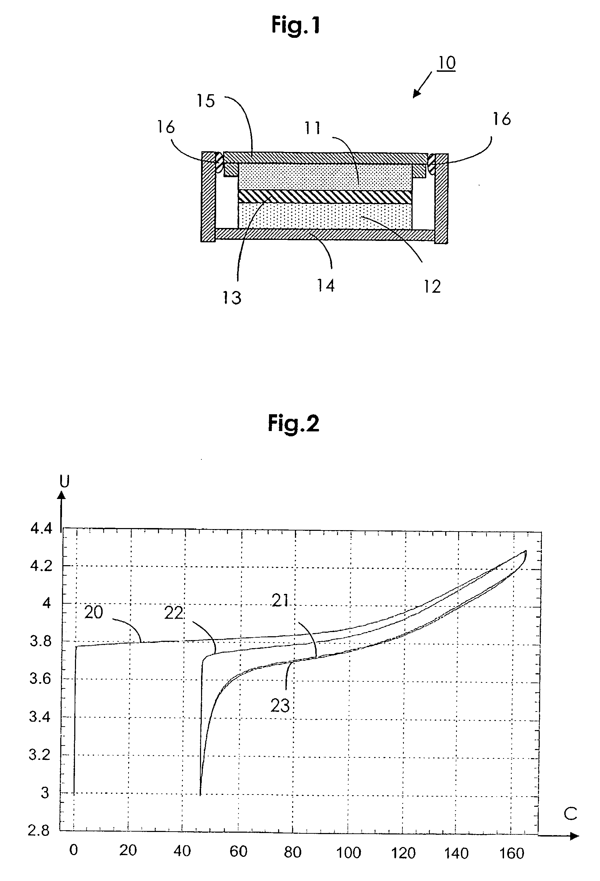

Sur la figure 2, la capacité C chargée ou déchargée en mAh/g de matière active est donnée en abscisse et en ordonnée la tension U du générateur en volts.

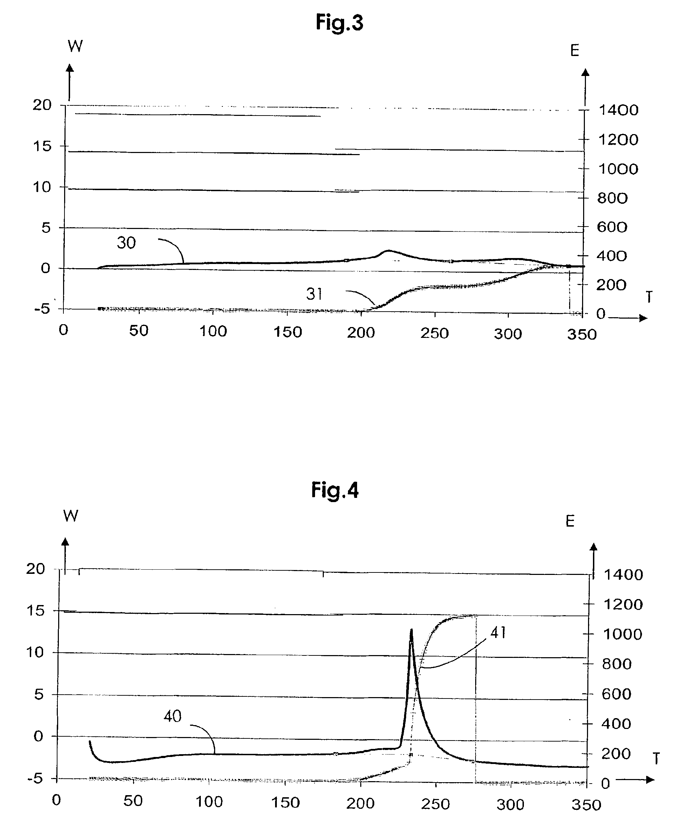

Sur les figures 3 et 4, la puissance thermique W en W/g de matière active est donnée en ordonnée gauche, l'énergie thermique cumulée E en J/g de matière active en ordonnées droite, et en abscisse la température T en °C.

### EXEMPLES 1 à 9

On a préparé de la manière décrite ci-après des matières actives selon l'invention dont les formules sont données dans le tableau 1 ci-dessous.

**Tableau 1**

| Exemple | Formule | R (%) |
|---|---|---|
| 1 | Li(Li_{0,10}Ni_{0,40}Mn_{0,36}Co_{0,14}) O_{1,96}F_{0,04} | 1,5 |
| 2 | Li(Ni_{0,52}Mg_{0,02}Mn_{0,30} CO_{0,16}) O_{1,87}F_{0,13} | 0,6 |
| 3 | Li(Li_{0,10}Ni_{0,40}Mn_{0,36}CO_{0,14}) O_{1,80}F_{0,20} | 0 |
| 4 | Li(Li_{0,10}Ni_{0,39}Mn_{0,36} CO_{0,15}) O_{1,70}F_{0,30} | 0,2 |
| 5 | Li(Li_{0,10}Ni_{0,35}Mn_{0,35}Co_{0,15} Al_{0.02}B_{0,03}) O_{1,80}F_{0,20} | 0,1 |
| 6 | Li(Li_{0,10}Ni_{0,35}Mn_{0,35}Co_{0,15} Ti_{0,05}) O_{1,80}F_{0,20} | 0,3 |
| 7 | Li(Li_{0,10}Ni_{0,35}Mn_{0,35}Co_{0,15} Si_{0,05}) O_{1,80}F_{0,20} | 0,4 |
| 8 | Li(Li_{0,10}Ni_{0,35}Mn_{0,35}Co_{0,15} Zn_{0,05}) O_{1,80}F_{0,20} | 0,45 |
| 9 | Li(Li_{0,05}Ni_{0,35}Mn_{0,30}Co_{0,30} O_{1,80}F_{0,20} | 0 |

### EXEMPLES COMPARATIFS 1 à 9

On a préparé de la manière décrite ci-après des matières actives comparatives dont les formules sont données dans le tableau 2 ci-dessous.

**Tableau 2**

| Exemple comparatif | Formule | R (%) |
|---|---|---|
| C1 | Li(Ni_{0,90}C_{0,01}Mn_{0,09})O₂ | |
| C2 | Li_{1,064}(Mn_{0,416}Ni_{0,415}CO_{0,169})_{0,936}O₂ | |
| C3 | Li_{1,10}Ni_{0,88}Mg_{0,02}O_{1,9}F_{0,1}+Na 3000ppm | 4,2 |
| C4 | LiNi_{0,93}Mn_{0,04} B_{0,03}O_{1,9}F_{0,1} | |
| C5 | Li(Ni_{0,52}Mg_{0,02}Mn_{0,30} Co_{0,16})O₂ | |
| C6 | Li(Ni_{0,46}Mn_{0,40} Co_{0,14})O_{1,4}F_{0,6} | 4 |
| C7 | Li (Ni_{0,30}Mn_{0,30} Co_{0,10}Li_{0.30})O_{1,87}F_{0,13} | 6 |
| C8 | Li (Ni_{0,30}Mn_{0,30} Co_{0,10}Ti_{0.30})O_{1,87}F_{0,13} | 6,7 |

### Préparation de la matière électrochimiquement active

Les matières actives selon l'invention de formule Li (Ni_{(1-x-y-z-t)} Coₓ Mn_{y} Li_{z} Mₜ) O₂₋ₑ Fₑ ont été synthétisées en utilisant un promoteur carbonaté élaboré à partir d'un mélange des sels de métaux dans les proportions stoechiométriques. Après réaction, le précipité obtenu est filtré et séché. On utilise ensuite du carbonate de lithium Li₂CO₃ comme agent de lithiation et du fluorure de lithium LiF comme source de fluor que l'on mélange énergiquement par voie mécanique au promoteur carbonaté dans les proportions stoechiométriques. Un traitement thermique est ensuite réalisé dans un four sous circulation d'oxygène à 900°C pendant 24 heures.

Les matières actives comparatives ont été préparées de la manière décrite ci-dessus, à l'exception de l'essai comparatif C3 dans lequel LiOH.H₂O et LiF ont été utilisés respectivement comme source de lithium et de fluor dans les proportions stoechiométriques ; 3000ppm de potassium sous forme KOH ont été rajoutés. Après mélange mécanique de 30 minutes, un premier traitement thermique a été réalisé à 480°C sous un flux d'oxygène pendant 10 heures suivi d'un second traitement thermique à 700°C pendant 20 heures sous oxygène.

### Caractérisation de la matière électrochimiquement active

Les matières actives selon la présente invention des exemples 1 à 9 ci-dessus sont sensiblement monophasées. La quantité de seconde phase éventuellement présente est inférieure à 3% en poids de la matière active.

La détermination de la quantité exacte de seconde phase peut être réalisée par diffraction des rayons X. Cependant, cette détermination est longue à effectuer car elle nécessite de déterminer la nature des secondes phases, leurs variétés cristallographiques et d'étalonner les pics de diffraction obtenus.

C'est pourquoi, on définit un critère permettant de rendre compte facilement de la présence de secondes phases dans la matière active. Ce critère, que l'on nommera R dans la suite de la description, est lié à la présence de raies de diffractions de rayons X de phases secondaires, situées dans un domaine d'angle dans lequel la matière active ne présente pas de raie de diffraction aux rayons X.

Soit R, la valeur en pourcentage du ratio de la somme des intensités des raies de diffraction dans la zone en 2 théta = 20 à 35° sur l'intensité de la raie de diffraction comprise entre 18 et 20°. Les angles sont donnés pour des radiations correspondant à la raie Kα du cuivre. Une valeur de R inférieure à 2% est équivalente à une quantité de phase secondaire inférieure à 3%.

Les matières actives selon la présente invention des exemples 1 à 9 ci-dessus sont caractérisées par une valeur R du critère inférieure à 2% comme le montre le Tableau 1.

L'analyse par diffraction des rayons X montre que la matière active cristallise dans la structure rhomboédrique. Par exemple, à partir du diagramme de diffraction des rayons X de la matière active de l'exemple 2, les paramètres de maille de la structure lamellaire ont pu être déterminés : a = 2,8825 Å et c = 14,27 Å.

Les matières actives correspondant aux exemples comparatifs C1 à C8 cristallisent également dans la structure rhomboédrique, mais ils ne sont pas monophasés. Dans le cas des exemples comparatifs C3 et C6 à C8, la quantité de seconde phase est bien supérieure à 3%, la valeur R du critère étant supérieure à 2 % comme le montre le Tableau 2.

### Réalisation d'une électrode

On réalise une électrode positive de générateur rechargeable au lithium de la manière suivante. Une pâte est préparée en mélangeant 86% en poids de matière électrochimiquement active, 6% en poids de polyfluorure de vinylidène (PVDF) et 8% en poids d'un matériau conducteur carboné, de préférence un mélange composé de 4% de suie et 4% de graphite, dans de la N-méthylpyrolidone (NMP). La pâte ainsi obtenue est déposée sur un feuillard d'aluminium qui sert de support conducteur à l'électrode. L'électrode est alors séchée à 140°C pendant 1h, puis calandrée.

### Assemblage d'un générateur électrochimique

L'électrode positive précédemment préparée est utilisée pour réaliser un générateur électrochimique rechargeable de format bouton. Pour former le générateur électrochimique 10 représenté sur la figure 1, une cathode 11 comprenant une matière électrochimiquement active selon l'invention est assemblée face à une anode 12 constituée d'une feuille de lithium métallique. L'anode peut aussi être constituée d'un matériau susceptible d'insérer du lithium dans sa structure, tel que par exemple le graphite, le coke, le noir de carbone et le carbone vitreux.

Les électrodes positive 11 et négative 12 encadrent un séparateur 13 constitué d'une membrane de polyéthylène (PE) commercialisée par la société "CELGARD". Le couple électrochimique ainsi obtenu est disposé dans une coupelle 14 fermée de manière étanche par un couvercle 15 par l'intermédiaire d'un joint 16. Le couple électrochimique est imprégné d'un électrolyte qui est un mélange de carbonate de propylène, de carbonate d'éthylène et de carbonate de diméthyle PC/EC/DMC dans les proportions volumiques 1/1/3, et contenant de l'hexafluorophosphate de lithium LiPF₆ à la concentration 1M. L'assemblage du générateur et son remplissage en électrolyte sont effectués en boîte à gants sous atmosphère d'argon exempte d'humidité.

On a fabriqué de cette manière des générateurs électrochimiques comprenant d'une part les matières actives selon l'invention des exemples 1 à 9, et d'autre part les matières actives des exemples comparatifs C1 à C8.

### Evaluation électrochimique du générateur

On impose au générateur deux charges et deux décharges successives entre 3 et 4,3 volts à température ambiante à un régime de 0,05 Ic, où lc est le courant nécessaire théorique pour décharger le générateur en une heure.

Les tableaux 3 et 4 rassemblent les résultats électrochimiques obtenus respectivement avec les matières actives des exemples 1 à 9 et avec celles des exemples comparatifs C1 à C8. Les capacités électrochimiques déchargées au premier cycle pour les matières actives des exemples 1 à 9 sont supérieures à 120 mAh/g. Les capacités électrochimiques des matières actives des exemples comparatifs C1 à C5 sont également élevées (supérieures à 120 mAh/g) alors que les capacités électrochimiques de celles des exemples comparatifs C6 à C8 sont faibles (inférieures à 100 mAh/g).

Sur la figure 2, on donne le résultat obtenu dans le cas d'un générateur contenant la matière active de l'exemple 2 selon l'invention. Sont représentées la courbe 20 de première charge, la courbe 21 de première décharge, la courbe 22 de deuxième charge, et la courbe 23 de deuxième décharge. Au premier cycle, la capacité chargée est de 165 Ah/g et la capacité déchargée est de 120 mAh/g.

### Caractérisation de l'électrode

La stabilité thermique des matières électrochimiquement actives précédemment préparées a été mesurée par Calorimétrie Différentielle à Balayage dite méthode « D.S.C. » (acronyme de Differential Scanning Calorimetry). Cette méthode D.S.C. est une technique déterminant la variation du flux thermique dans un échantillon soumis à une programmation en température. Lorsqu'un matériau est chauffé, sa structure évolue et les transformations se réalisent avec échange de chaleur. Dans le cas présent, on observe une réaction exothermique entre l'oxygène dégagé par le matériau positif et l'électrolyte. L'analyse par D.S.C. renseigne sur la température de transformation du matériau (pic endothermique ou exothermique), sur la puissance thermique développée (hauteur du pic), et sur l'énergie thermique requise pour la transformation (surface du pic par rapport à la ligne de base).

Après deux cycles de charge / décharge à température ambiante effectués dans les conditions décrites précédemment, on réalise une charge à 0,05 Ic jusqu'à ce que la tension du générateur atteigne 4.3 V, suivie d'une surcharge à 0,2 Ic pendant 5 heures. On prélève alors 3 mg de matière active à l'état surchargé sur l'électrode positive imprégnée d'électrolyte. L'échantillon de matière active est chauffé de 20°C à 500°C à une vitesse de 10°C/mn sous argon. L'analyse par D.S.C. renseigne sur la stabilité thermique à l'état surchargé de la matière active, donc sur le comportement de l'électrode vis à vis de l'électrolyte.

Dans l'analyse par D.S.C., les paramètres suivants sont caractéristiques de la stabilité thermique du matériau :
- W est la puissance thermique dégagée en W/g de matière active ; lorsque l'amplitude des variations de W par rapport à la ligne de base est supérieure à 5 W/g, les réactions qui se produisent deviennent violentes ;
- Tp est la température en °C à laquelle se produit la réaction violente entre la matière active surchargée et l'électrolyte ;
- E est l'énergie thermique cumulée en J/g de matière active en fonction de la température (calculée par rapport à ligne de base).

Dans le tableau 3 sont données les amplitudes de puissance thermique maximum (hauteur du pic de DSC par rapport à la ligne de base) ainsi que les énergies totales des matières actives à l'état surchargé pour les exemples 1 à 9. Pour tous ces exemples la puissance thermique est très faible (inférieure à 3 W/g) et l'énergie totale est inférieure à 450 J/g.

Dans le tableau 4 sont données les amplitudes de puissance thermique maximum (hauteur du pic DSC par rapport à la ligne de base) ainsi que les énergies totales des matières actives à l'état surchargé pour les exemples comparatifs C1 à C8. Pour les exemples comparatifs C1 à C5 qui présentent une capacité déchargée au premier cycle supérieure à 120 mAh/g, l'amplitude maximum de la puissance thermique est très élevée (supérieure à 7 W/g) et l'énergie totale est supérieure à 900 J/g. Pour les exemples comparatifs C6 à C8, l'amplitude maximum de la puissance thermique est très faible et l'énergie totale est inférieure à 350 J/g, mais la capacité déchargée au premier cycle est inférieure à 100 mAh/g.

La figure 3 représente, issues du test D.S.C., une courbe 30 de puissance thermique W et une courbe 31 d'énergie thermique cumulée E en fonction de la température T, estimée en utilisant comme ligne de base la courbe 32, d'une électrode surchargée comprenant la matière active de l'exemple 2.

La figure 4 représente une courbe 40 de puissance thermique W et une courbe 41 d'énergie thermique totale E, en fonction de la température T, issues du test D.S.C. d'une électrode comprenant la matière active comparative de l'exemple C3.

Les résultats du test D.S.C. des figures 3 et 4 montrent clairement qu'une matière active selon la présente invention présente une stabilité thermique supérieure à la matière active comparative qui ne fait pas partie de l'invention. En effet la matière active comparative présente une amplitude de puissance thermique de l'ordre de 13 W/g avec une énergie thermique cumulée de 1100 J/g alors que la matière active selon l'invention présente une puissance thermique inférieure à 3 W/g et une énergie thermique cumulée inférieure à 400 J/g. La matière électrochimiquement active selon la présente invention présente donc des caractéristiques de stabilité thermique très améliorées par rapport à la matière active comparative, ainsi qu'une capacité électrochimique réversible élevée.

On pourra sans sortir du cadre de l'invention envisager l'utilisation d'un support conducteur d'électrode de nature et de structure différente. Enfin, les différents ingrédients entrant dans la réalisation de la pâte, ainsi que leurs proportions relatives, pourront être changés. Notamment des additifs destinés à faciliter la mise en forme de l'électrode, comme un épaississant ou un stabilisateur de texture, pourront y être incorporés dans des proportions mineures.

**Tableau 3**

| Exemple | Formule | Capacité chargée au premier cycle | Capacité déchargée au premier cycle | Amplitude maximale de la puissance thermique DSC à l'état surchargé | Energie thermique totale DSC à l'état surchargé |
|---|---|---|---|---|---|
| | | (mAh/g) | (mAh/g) | (W/g) | (J/g) |
| 1 | Li(Li_{0,10}Ni_{0,40}Mn_{0,36}Co_{0,14}) O_{1,96}F_{0,04} | 153 | 133 | 0.85 | 300 |
| 2 | Li(Ni_{0,52}Mg_{0,02}Mn_{0,30} Co_{0,16}) O_{1,87}F_{0,13} | 165 | 120 | 1.2 | 350 |
| 3 | Li(Li_{0,10}Ni_{0,40}Mn_{0,36}Co_{0,14}) O_{1,80}F_{0,20} | 157 | 130 | 2.8 | 450 |
| 4 | Li(Li_{0,10}Ni_{0,39}Mn_{0,36}Co_{0,15})O_{1,70}F_{0,30} | 160 | 135 | 0.8 | 300 |
| 5 | Li(Li₀,₁₀Ni_{0,35}Mn_{0,35}Co_{0,15} Al_{0,02}B_{0,03}) O_{1,80}F_{0,20} | 153 | 125 | 1.1 | 370 |
| 6 | Li(Li_{0,10}Ni_{0,35}Mn_{0,35}Co_{0,15} Ti₀,₀₅) O_{1,80}F_{0,20} | 155 | 127 | 0.95 | 310 |
| 7 | Li(Li_{0,10}Ni_{0,35}Mn_{0,35}Co_{0,15} Si_{0,05}) O_{1,80}F_{0,20} | 157 | 130 | 1.2 | 380 |
| 8 | Li(Li_{0,10}Ni_{0,35}Mn_{0.35}Co_{0,15} Zn_{0,05}) O_{1,80}F_{0,20} | 155 | 125 | 1.7 | 400 |
| 9 | Li(Li_{0,05}Ni_{0,35}Mn_{0,30}Co_{0,30}) O_{1,80}F_{0,20} | 163 | 130 | 2 | 410 |

**Tableau 4**

| Exemple comparatifs | Formule | Capacité chargée au premier cycle | Capacité déchargée au premier cycle | Amplitude maxi de la puissance thermique DSC à l'état surchargé | Energie thermique totale DSC à l'état surchargé |
|---|---|---|---|---|---|
| | | (mAh/g) | (mAh/g) | (W/g) | (J/g) |
| C1 | Li(Ni_{0,90}Co_{0,01}Mn_{0,09})O₂ | 195 | 178 | 20 | 1300 |
| C2 | Li_{1,064}(Mn_{0,416}Ni_{0,415}Co_{0,169})_{0,936}O₂ | 185 | 160 | 7 | 900 |
| C3 | Li_{1,10}Ni_{0,88}Mg_{0,02}O_{1,9}F_{0,1}+Na 3000ppm | 160 | 120 | 13 | 1050 |
| C4 | LiNi_{0,93}Mn_{0,04} B_{0,03}O_{1,9}F_{0,1} | 183 | 130 | 10 | 1150 |
| C5 | Li(Ni_{0,52}Mg_{0,02}Mn_{0,30} Co_{0,16})O₂ | 180 | 157 | 15 | 900 |
| C6 | Li(Ni_{0,46}Mn_{0,40} Co_{0,14})O_{1,4}F_{0,6} | 135 | 95 | 0.8 | 310 |
| C7 | Li (Ni_{0,30}Mn_{0,30}Co_{0,10}Li_{0.30})O_{1,87}F_{0,13} | 110 | 90 | 1 | 350 |
| C8 | Li (Ni_{0,30}Mn_{0,30} Co_{0,10}Ti_{0.30})O_{1,87}F_{0,13} | 105 | 80 | 1.1 | 300 |

## Revendications

1. Matière électrochimiquement active cristallisant dans une structure rhomboédrique et résultant de la substitution d'une partie du nickel d'un oxyde mixte de nickel et de lithium du type LiNiO₂, **caractérisée en ce que** ladite matière active répond à la formule :
Li (Ni_{(1-x-y-z-1)} Coₓ Mn_{y} Li_{z} Mₜ) O₂₋ₑ Fe
où
0,05< x ≤ 0,30
0,05 < y ≤ 0,50
0 ≤ z ≤ 0.20
0 ≤ t ≤ 0,30
0,01 < e ≤ 0,50
0,20 ≤ (1-x-y-z-t)
dans laquelle M est au moins un élément parmi Mg, Al, B, Ti, Si, Zr, Fe, Zn, Cu
et dans laquelle la quantité d'une seconde phase est inférieure à 3% en poids de ladite matière active.

2. Matière active selon la revendication 1, dans laquelle 0,20< y ≤ 0,40.

3. Matière active selon l'une des revendications précédentes, dans laquelle 0,05< z ≤ 0,15.

4. Matière active selon l'une des revendications précédentes, dans laquelle 0,01 < t ≤ 0,10.

5. Matière active selon l'une des revendications précédentes, dans laquelle 0,01 < e ≤ 0,30.

6. Matière active selon l'une des revendications précédentes, dans laquelle M contient au moins Mg.

7. Matière active selon l'une des revendications 1 à 5, dans laquelle M contient au moins Al.

8. Matière active selon l'une des revendications 1 à 5, dans laquelle M contient au moins B.

9. Matière active selon l'une des revendications 1 à 5, dans laquelle M contient au moins Si.

10. Matière active selon l'une des revendications 1 à 5, dans laquelle M contient au moins Ti.

11. Matière active selon l'une des revendications précédentes, dans laquelle la quantité d'une seconde phase éventuelle est inférieure à 1% en poids de ladite matière active.

12. Electrode positive de générateur électrochimique rechargeable au lithium comprenant un support conducteur recouvert d'une couche active contenant une matière active selon l'une des revendications précédentes.

13. Electrode positive selon la revendication 12, dans laquelle ladite couche active contient en outre un liant.

14. Electrode positive selon l'une des revendications 12 et 13, dons laquelle ladite couche active contient en outre un matériau conducteur.

15. Générateur électrochimique rechargeable au lithium comprenant une électrode positive contenant une matière active selon l'une des revendications 1 à 11, et une électrode négative dont la matière active est choisie parmi du lithium métallique, les alliages du lithium et un matériau susceptible d'insérer du lithium dans sa structure.

16. Générateur électrochimique selon la revendication 15, comprenant une électrode négative dont la matière active est un matériau carboné susceptible d'insérer du lithium dans sa structure.

17. Générateur électrochimique selon la revendication 16, dans lequel ledit matériau carboné est choisi parmi le graphite, le coke, le noir de carbone et le carbone vitreux.

## Claims

1. An electrochemically active material crystallizing in a rhombohedral structure and resulting from substituting a portion of the nickel of a composite nickel and lithium oxide of the LiNiO₂ type, said active material being **characterized in that** it satisfies the formula:
Li(Ni_{(1-x-y-z-t})CoₓMn_{y}Li_{z}Mₜ)O₂₋ₑFₑ
where
0.05 < ≤ 0.30
0.05 < y ≤ 0.50
0 ≤ z ≤ 0.20
0 ≤ t ≤ 0.30
0.01 < e ≤ 0.50
0.20 ≤ (1-x-y-z-t)
in which M is at least one element from Mg, AI, B, Ti, Si, Zr, Fe, Zn, and Cu,
and in which the quantity of any second phase is less than 3% by weight of said active material.

2. The active material according to claim 1, in which 0.20 < y ≤ 0.40.

3. The active material according to one of the preceding claims, in which 0.05 <z ≤ 0.15.

4. The active material according to one of the preceding claims, in which 0.01 < t ≤ 0.10.

5. The active material according to one of the preceding claims, in which 0.01 < e ≤ 0.30.

6. The active material according to one of the preceding claims, in which M contains at least Mg.

7. The active material according to one of claims 1 to 5, in which M contains at least Al.

8. The active material according to one of claims 1 to 5, in which M contains at least B.

9. The active material according to one of claims 1 to 5, in which M contains at least Si.

10. The active material according to one of claims 1 to 5, in which M contains at least Ti.

11. The active material according to one of the preceding claims, in which the quantity of any second phase is less than 1% by weight of said active material.

12. A positive electrode for a lithium rechargeable electrochemical cell, the electrode comprising a conductive support covered in an active layer containing an active material according to one of the preceding claims.

13. A positive electrode according to claim 12, in which said active layer also contains a binder.

14. A positive electrode according to one of claims 12 or 13, in which said active layer also contains a conductive material.

15. A lithium rechargeable electrochemical cell including a positive electrode containing an active material according to one of claims 1 to 11, and a negative electrode whose active material is selected from metallic lithium, alloys of lithium and a material capable of inserting lithium in its structure.

16. An electrochemical cell according to claim 15, including a negative electrode whose active material is a carbon-containing material capable of inserting lithium in its structure.

17. An electrochemical cell according to claim 16, in which said carbon-containing material is selected from graphite, coke, carbon black, and vitreous carbon.

## Patentansprüche

1. Elektrochemisches aktives Material, das zu einer rhomboedrischen Struktur auskristallisiert und zum Austausch eines Teils des Nickels eines Mischoxids aus Nickel und Lithium von der Art LiNiO₂ führt, **dadurch gekennzeichnet, dass** das aktive Material folgender Formel entspricht:
Li(Ni_{(1-x-y-z-t)} Coₓ Mn_{y} Li_{z} Mₜ) O₂₋ₑ Fe,
wobei
0.05 < x ≤ 0.30
0.05 < y ≤ 0.50
0 ≤ z ≤ 0.20
0 ≤ t ≤ 0.30
0.01 < e ≤ 0.50
0.20 ≤ (1-x-y-z-t)
wobei M mindestens ein Element aus Mg, Al, B, Ti, Si, Zr, Fe, Zn, Cu ist,
und wobei die Menge einer zweiten Phase kleiner ist als 3 Gewichtsprozente des aktiven Materials.

2. Aktives Material nach Anspruch 1, wobei 0,20 < y ≤ 0,40.

3. Aktives Material nach einem der vorhergehenden Ansprüche, wobei 0,05 < z ≤ 0,15.

4. Aktives Material nach einem der vorhergehenden Ansprüche, wobei 0.01 ≤ t ≤ 0,10.

5. Aktives Material nach einem der vorhergehenden Ansprüche, wobei 0,01 < e ≤ 0,30.

6. Aktives Material nach einem der vorhergehenden Ansprüche, wobei M mindestens Mg enthält.

7. Aktives Material nach einem der Ansprüche 1 bis 5, wobei M mindestens Al enthält.

8. Aktives Material nach einem der Ansprüche 1 bis 5, wobei M mindestens B enthält.

9. Aktives Material nach einem der Ansprüche 1 bis 5, wobei M mindestens Si enthält.

10. Aktives Material nach einem der Ansprüche 1 bis 5, wobei M mindestens Ti enthält.

11. Aktives Material nach einem der vorhergehenden Ansprüche, wobei die Menge einer möglichen zweiten Phase kleiner ist als 1 Gewichtsprozent des aktiven Materials.

12. Positive Elektrode einer Lithium aufladbaren elektrochemischen Zelle, umfassend einen leitfähigen Träger, der mit einer aktiven Schicht überzogen ist, die ein aktives Material nach einem der vorhergehenden Ansprüche enthält.

13. Positive Elektrode nach Anspruch 12, wobei die aktive Schicht außerdem ein Bindemittel enthält.

14. Positive Elektrode nach einem der Ansprüche 12 und 13, wobei die aktive Schicht außerdem ein leitfähiges Material enthält.

15. Lithium aufladbare elektrochemische Zelle, umfassend eine positive Elektrode, die ein aktives Material nach einem der Ansprüche 1 bis 11 enthält, und eine negative Elektrode, deren aktives Material aus Lithiummetall, Lithiumlegierungen und einem Material, in dessen Struktur Lithium eingefügt werden kann, gewählt wird.

16. Elektrochemische Zelle nach Anspruch 15, umfassend eine negative Elektrode, deren aktives Material ein kohlenstoffhaltiges Material ist, das Lithium in seine Struktur einfügen könnte.

17. Elektrochemische Zelle nach Anspruch 16, wobei das kohlenstoffhaltige Material aus Graphit, Koks, Russschwarz und Glaskohlenstoff gewählt wird.
